(19) Europäisches Patentamt
European Patent Office
Office européen des brevets

(11) **EP 2 321 708 B1**

(12) **EUROPÄISCHE PATENTSCHRIFT**

(45) Veröffentlichungstag und Bekanntmachung des Hinweises auf die Patenterteilung:
**22.02.2012 Patentblatt 2012/08**

(51) Int Cl.:
***G05B 13/04*** *(2006.01)*

(21) Anmeldenummer: **09782225.8**

(22) Anmeldetag: **26.08.2009**

(86) Internationale Anmeldenummer:
**PCT/EP2009/061009**

(87) Internationale Veröffentlichungsnummer:
**WO 2010/023228 (04.03.2010 Gazette 2010/09)**

(54) **VERFAHREN UND REGELANORDNUNG ZUR REGELUNG EINER REGELSTRECKE MIT SICH WIEDERHOLENDEM ARBEITSZYKLUS**

METHOD AND CONTROL ARRANGEMENT FOR CONTROLLING A CONTROLLED SYSTEM WITH A REPEATING WORKING CYCLE

PROCÉDÉ ET DISPOSITIF DE RÉGLAGE D'UN SYSTÈME ASSERVI À CYCLE DE TRAVAIL RÉPÉTITIF

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **01.09.2008 AT 4642008 U**

(43) Veröffentlichungstag der Anmeldung:
**18.05.2011 Patentblatt 2011/20**

(73) Patentinhaber: **AVL List GmbH**
**8020 Graz (AT)**

(72) Erfinder:
• **KOKAL, Helmut**
**A-8503 St. Josef (AT)**
• **MAYRHOFER, Josef**
**A-8010 Graz (AT)**
• **DENGER, Dirk**
**A-8020 Graz (AT)**
• **SCHMIDT, Martin**
**63225 Langen (DE)**
• **DEL RE, Luigi**
**A-4040 Linz (AT)**

(74) Vertreter: **Weiss, Christian et al**
**Patentanwälte**
**Pinter, Laminger & Weiss OG**
**Prinz-Eugen-Straße 70**
**A-1040 Wien (AT)**

(56) Entgegenhaltungen:
**EP-A2- 0 812 682      EP-A2- 1 087 106**
**DE-A1- 10 038 570**

• **SHIROTA K ET AL: "Development of Virtual and Real Simulator for Engine" SAE WORLD CONGRESS,, 5. März 2001 (2001-03-05), Seiten 1-7, XP009135933**

EP 2 321 708 B1

**Beschreibung**

Die gegenständliche Erfindung betrifft ein Verfahren und eine Regelanordnung zur Regelung einer Prüfstandsanordnung mit einem Prüfling mit sich wiederholendem Arbeitszyklus und mit einer Belastungsmaschine, die durch eine Verbindungswelle mit dem Prüfling verbunden ist.

Auf einem Prüfstand, z.B. ein Motor- oder Antriebsstrangprüfstand, ist der Prüfling, z.B. der Verbrennungsmotor, Fahrzeugantrieb, Antriebsstrang, etc., durch eine Verbindungswelle mit einer Belastungsmaschine (Dyno), in der Regel ein Elektromotor, verbunden, womit ein gewünschtes Belastungsmoment am Prüfling angelegt werden kann, wobei die Belastungsmäschine oft auch als Antriebsmaschine betrieben werden kann. Herkömmliche Verbindungswellen werden üblicherweise so ausgewählt, dass die Eigenfrequenz des Prüfstandaufbaus unter der Leerlaufdrehzahl zu liegen kommt, z.B. bei 17 Hz gegenüber einer Leerlauffrequenz von ca. 20Hz bei einem Vier-Zylinder-Motor. Damit werden Resonanzen im Arbeitsbereich des Prüflings vermieden, es wird aber die Dynamik der Belastungs- oder Antriebsmomentes beschränkt, da die Verbindungswelle wie ein Tiefpassfilter wirkt und Momentkomponenten oberhalb einer Grenzfrequenz, z.B. >ca.15Hz, abgeschwächt werden. Für gewisse Prüfläufe wäre es aber wichtig, Drehmomente mit Komponenten deutlich höherer Frequenz, z.B. 60 Hz, übertragen zu können. Das bedeutet jedoch, dass die Verbindung im Arbeitsbereich des Motors zu einer unerwünschten Resonanz angeregt werden kann, da die Anlage im kritischen Bereich, z.B. bei der die Zündfrequenz gleich der Eigenfrequenz der Verbindung ist, betrieben wird. Bei einer Eigenfrequenz von 60Hz würde z.B. bei einem Vier-Zylinder-Motor im Bereich von 1800rpm Resonanz auftreten. Beim Einsatz einer solchen Verbindungswelle ist somit eine Regelung notwendig, die in der Lage ist, die dabei auftretende Resonanz zu dämpfen. Eine herkömmliche Regelung auf der Grundlage aktueller Messwerte kann das Problem teilweise entschärfen, ist aber im allgemeinen dazu nicht geeignet, da eine solche Regelung immer nur zeitverzögert auf den aktuellen Istwert reagieren kann. Die Zeitverzögerung ergibt sich durch die inne wohnende Totzeit und durch den Tiefpasscharakter von Mess- und Stelleinrichtungen und wird in Folge als Systemverzögerung bezeichnet. Die Systemverzögerung ist bei höheren Frequenzen nicht mehr vernachlässigbar und bewirkt, dass schnelle Soll-Momentenänderungen auf dem Prüfstand nur zeitverzögert eingeregelt werden können.

Ein Beispiel einer geeigneten Regelung, die auftretende Resonanzen bei Einsatz einer Verbindungswelle, die eine höhere Eigenfrequenz ergibt, dämpfen kann, ist in "Development of ‚Virtual and Real Simulator' for Engine", K. Shirota, et al, SAE 2001 World Congress, SAE Technical Paper Series 2001-01-1355, beschrieben. Die Regelung basiert dabei auf einem bekannten Regelungskonzept, nämlich einem H-infinity controller.

Die gegenständliche Erfindung stellt sich daher die Aufgabe ein Regelungsverfahren und eine Regelungsanordnung anzugeben, das bzw. die in der Lage ist, die oben angeführten Resonanzprobleme bei der zeitbasierten Regelung von Anordnungen mit wiederkehrendem Arbeitszyklus, insbesondere von Prüfstandsanordnungen mit Verwendung einer Verbindung zwischen Prüfling und Dyno mit einer Eigenfrequenz, die im Bereich des Arbeitsbereichs des Prüflings liegt, zumindest zu verringern.

Diese Aufgabe wird für das Verfahren und die Regelanordnung erfindungsgemäß dadurch gelöst, dass aus einem aktuellen Istwert der Regelung und einer Vorhersage eines bevorstehenden, systemverzögerungsfreien Istwertes auf der Grundlage des Istwertes eines vorherigen Arbeitszyklus ein modifizierter Istwert ermittelt wird, der der Regelung rückgeführt wird. Damit wird nicht nur der aktuelle Istwert für die Regelung verwendet wird, sondern auch eine Prädiktion der bevorstehenden, systemverzögerungsfreien Istwerte auf der Grundlage vorheriger Arbeitszyklen, womit die innewohnende Systemverzögerung kompensiert werden kann. Durch die Kompensation der Systemverzögerung ist die Regelung in der Lage ohne der vorhandenen Systemverzögerung auf Änderungen der Istwerte zu reagieren, wodurch eine phasenrichtige Bedämpfung von Resonanzen höherer Frequenz möglich wird.

Dies kann vorteilhafterweise so geschehen, dass ein aktueller Istwert der Regelung in einen systemverzögerungsbehafteten transienten Anteil, der die Änderung des aktuellen zu einem vorangegangenen Arbeitszyklus darstellt, und in einen prädiktiven um die Systemverzögerung kompensierten Anteil, der einen sich wiederholenden Anteil darstellt, aufgeteilt wird und aus dem systemverzögerungsbehafteten transienten Anteil und dem systemverzögerungsfreien prädiktiven Anteil ein modifizierter Istwert ermittelt wird, der der Regelung rückgeführt wird. Der prädiktive Anteil kann vorteilhafterweise aus einem Modell produziert werden, das zum Beispiel durch eine iterative Modellbildung beruht, bzw. direkt aus einem nach dem Prinzip der iterativen Regelung gebildeten Signal ermittelt wird. Der transiente Anteil der aktuellen Istwerte kann vorteilhaft auch mit einem arbeitszyklussynchronen Mittelwertfilter vorverarbeitet werden, um den eventuell noch vorhandenen iterativen Anteil im Signal zu eliminieren.

Ganz besonders vorteilhaft wird der modifizierte Istwert ermittelt, indem die Istwerte eines vorangegangenen Arbeitszyklus der Anlage zeit- oder winkelaufgelöst in einer Speichereinheit abgespeichert werden und einer Berechnungseinheit die aktuellen Istwerte und die gespeicherten vorangegangenen Istwerte zugeführt werden, die in den gespeicherten vorangegangenen Istwerten inne wohnende Systemverzögerung kompensiert wird, indem die um die Systemverzögerung weiter vorne liegende gespeicherten vorangegangenen Istwerte als prädiktive Istwerte verwendet werden, in der Berechnungseinheit zur Ermittlung der transienten Istwerte die Differenz aus den gespeicherten verzögerungsbehafteten vorangegangenen Istwerten und den verzögerungsbehafteten aktuellen Istwerten gebildet wird und die prädiktiven Istwerte und die transienten Istwerte zum modifizierten Istwert addiert werden.

Besonders einfach kann die Kompensation durchgeführt werden, wenn die Speichereinheit die gespeicherten vorangegangenen Istwerte und die um die Systemverzögerung winkel- oder zeitverschobenen gespeicherten Istwerte an die Berechnungseinheit weitergibt.

Bei üblichen Motor- oder Antriebsstrangprüfständen ohne hochdynamischem Dyno wird die Eigenfrequenz der Prüfstandsanordnung, z.B. Verbrennungsmotor - Welle - Dyno, häufig so gewählt, dass die Eigenfrequenz der Anordnung zwischen der Zündfrequenz im Leerlauf und der Zündfrequenz bei Anlasserdrehzahl liegt. Diese Eigenfrequenz liegt üblicherweise je nach Zylinderanzahl des Verbrennungsmotors bei 15-30Hz. Die Zündfrequenz (= dominierende Anregefrequenz) entspricht z.B. bei 4-Takt Motoren der doppelten Umdrehungsfrequenz. Durch ein fehlerhaftes Zündverhalten des Motors kann die Zündfrequenz (= dominierende Anregefrequenz) im Arbeitsbereich des Prüflings aber im Bereich der Eigenfrequenz zu liegen kommen. Laufen z.B. bei einem 4-Zylinder 4-Takt Motor nur zwei Zylinder, so liegt die dominierende Anregefrequenz bei der halben Umdrehungsfrequenz und kann somit bei einer bestimmten Drehzahl (welche jetzt oberhalb der Leerlaufdrehzahl sein kann) im Bereich der Eigenfrequenz liegen. Dies führt zu Resonanzerscheinungen (Schwingungen mit der Eigenfrequenz), welche im schlimmsten Fall zur Zerstörung der Anlage führen können. Auch hier ist daher notwendig, durch geeignete Reglereingriffe diese Schwingungen zu bedämpfen. Aufgrund der beschränkten Dynamik des nicht hochdynamischen Dynos eines solchen herkömmlichen Prüfstandes, würde das gegenständliche Verfahren ohne zusätzliche Maßnahmen zu Stellgrößenbeschränkungsverletzungen führen und den Dyno in Überlast betreiben, was eine Abschaltung zur Folge hätte. Um zu vermeiden, dass dafür eine anderes Regelverfahren implementiert werden muss, werden aus dem aktuellen Istwert die Frequenzanteile herausgefiltert, die über dem 1,4-fachen, vorzugsweise über dem $\sqrt{2}$ - der Eigenfrequenz liegen und der modifizierte Istwert wird mit diesem gefilterten aktuellen Istwert ermittelt. Mit dieser zusätzlichen Filterung kann das gegenständliche Regelverfahren auch auf herkömmlichen Prüfständen eingesetzt werden. Das erlaubt es auch, bestehende Prüfstände mit dem erfindungsgemäßen Regelverfahren nachzurüsten, die dann sowohl für hochdynamische Prüfungen als auch für Prüfungen mit üblicher Dynamik geeignet sind.

Die gegenständliche Erfindung wird nachfolgend anhand der schematischen, beispielhaften, nicht einschränkenden und vorteilhafte Ausgestaltungen zeigenden Figuren 1 bis 5 beschrieben. Dabei zeigt

Fig. 1 ein Regelschema mit einer erfindungsgemäßen Istwertberechnungseinheit in Feedback-Zweig,
Fig. 2 ein Beispiel einer Regelstrecke,
Fig. 3 ein schematisches Schaltbild einer Berechnungseinheit zur Ermittlung des modifizierten Istwertes,
Fig. 4 eine weitere Ausgestaltung eines erfindungsgemäßen Regelschemas und
Fig. 5 eine weitere Ausgestaltung eines erfindungsgemäßen Regelschemas.

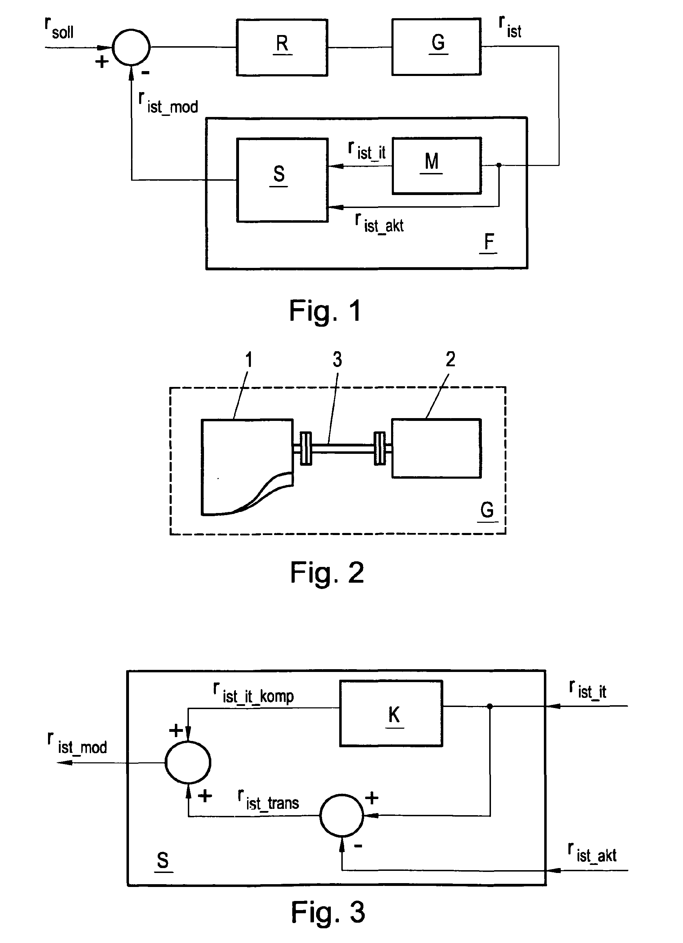

Figur 1 zeigt ein einfaches Regelschema mit einer zu regelnden Regelstrecke G, hier eine Prüfstandsanordnung mit Prüfling 1 (z.B. Verbrennungsmotor, Antriebsstrang, etc.) und Belastungsmaschine 2 (z.B. Elektromotor), die mit einer Verbindungswelle 3 verbunden sind, wie in Fig. 2 dargestellt, und einem Regler R. Die Regelstrecke G ist in bekannter Weise ein regelungstechnisches Modell der zu regelnden Anordnung, hier der Prüfstandsanordnung, und der Regler R regelt eine bestimmte Regelgröße r der Regelstrecke G, hier z.B. ein Wellenmoment oder eine Drehzahl. Der Regelung wird ein Sollwert $r_{soll}$ vorgegeben und ein Istwert $r_{ist}$ erfasst (z.B. gemessen), der in einer Feedbackschleife in bekannter Weise rückgeführt und vom Sollwert $r_{soll}$ abgezogen wird.

Die aktuellen Istwerte $r_{ist\_akt}$ stehen jedoch durch die Messung und Verarbeitung immer zeitverzögert zur Verfügung. Außerdem wird durch die Regelung und dem Reaktionsvermögen der Anlage selbst eine Zeitverzögerung eingeführt. Die verarbeitungs-, regelungs- und anlagenspezifischen Verzögerungen bzw. Totzeiten werden in weiterer Folge allgemein als Systemverzögerung bezeichnet. Die Systemverzögerung kann durch die Kenntnis des Reglers R und der Anlage vorab ermittelt werden und ist als bekannt anzusehen. Durch die Systemverzögerung kann immer nur zeitverzögert auf Änderungen der Istwerte $r_{ist}$ reagiert werden. Um dieses Problem abzuschwächen, werden nun zukünftige (prädiktive) systemverzögerungsfreie Istwerte ermittelt, die der Regelung zugeführt werden. Da genaue Voraussagen der zukünftigen Istwerte natürlich nicht möglich sind, werden Näherungswerte der zukünftigen Istwerte ermittelt. Um die Systemverzögerung zu kompensieren bzw. abzuschwächen, werden dabei bevorzugt um die Systemverzögerung in der Zukunft liegende Istwerte bzw. Istwertanteile ermittelt.

Um mögliche auftretende Resonanzen in der Regelstrecke G dämpfen zu können, ist nun im Feedbackzweig eine Istwertberechnungseinheit F vorgesehen, die aus dem Istwert $r_{ist}$ einen modifizierten Istwert $r_{ist\_mod}$ berechnet, der der Regelung rückgeführt wird, wie im Nachfolgenden im Detail beschrieben wird.

Ein Arbeitszyklus, z.B. ein kompletter Verbrennungszyklus aller Zylinder bei einem Verbrennungsmotor (z.B. 720° Kurbelwinkel bei einem 4-Takter), tritt wiederkehrend auf. Dieser Umstand wird erfindungsgemäß ausgenutzt. Dazu ist in der Istwertberechnungseinheit F eine Speichereinheit M vorgesehen, in der die Istwerte $r_{ist}$ zumindest eines dem aktuellen Arbeitszyklus vorangegangenen Arbeitszyklus gespeichert sind. In der Speichereinheit M ist somit immer ein vergangener, bevorzugt der unmittelbar vorangegangene, Arbeitszyklus gespeichert. Die Speicherung erfolgt dabei bevorzugt winkel- bzw. zeitaufgelöst in diskreten Schritten, z.B. ein Wert pro Grad Kurbelwinkel oder pro Millisekunde. Bevorzugt ist der Speicher M als zyklischer Speicher ausgeführt, d.h. dass die gespeicherten Werte immer auflösungsgetriggert durchgeschoben werden, bis diese wieder aus dem Speicher herausfallen.

Die Istwerte des vorangegangenen Arbeitszyklus $r_{ist\_it}$ werden nun zeitsynchron (oder winkelsynchron) einer Berechnungseinheit S zugeführt, d.h. das zur aktuellen Zeit (oder Winkel) der jeweils zur selben Zeit (oder Winkel) gespeicherte vergangene Wert in die Berechnungseinheit S zugeführt wird. Ebenso werden die aktuellen Istwerte $r_{ist\_akt}$ der Berechnungseinheit S zugeführt. Die Istwerte $r_{ist}$ ändern sich von einem Arbeitszyklus zum nächsten um einen eventuell vorhandenen transienten Anteil. Ändert sich die Last bzw. die Drehzahl über einen Arbeitszyklus nicht, dann ist die Anlage in einem quasistationären Betrieb, der sich pro Arbeitszyklus wiederholt, wobei dieser Anteil als iterativer Anteil bezeichnet wird. In diesem Fall wäre der transiente Anteil Null. Die Dynamik des transienten Anteils ist dabei geringer als die Dynamik des iterativen Anteils. Der transiente Anteil der aktuellen Istwerte kann auch mit einem arbeitszyklussynchronen Mittelwertfilter vorverarbeitet werden, um den eventuell noch vorhandenen iterativen Anteil im Signal zu eliminieren. Dieser Anteil im Signal entsteht, wenn der hochdynamische Anteil nicht zur Gänze wiederholbar ist.

In einer bevorzugten Methode werden nun die gespeicherten Werte $r_{ist\_it}$ des vorangegangenen Arbeitszyklus herangezogen, um prädiktive (in der Zukunft liegende) Istwerte zu ermitteln und die Systemverzögerung zu kompensieren. Es wird dazu in der Berechnungseinheit S zuerst ein transienter Anteil in Form der transienten Istwerte $r_{ist\_trans}$ berechnet, indem die aktuellen Istwerte $r_{ist\_akt}$ zeitsynchron (oder winkelsynchron) von den gespeicherten vorangegangenen Istwerten $r_{ist\_it}$ abgezogen werden, wie in Fig. 3 dargestellt. In diesem transienten Anteil $r_{ist\_trans}$ ist aber immer noch die Systemverzögerung enthalten. In einer Kompensationseinheit K werden weiters prädiktive Istwerte ermittelt, indem die Systemverzögerung in den gespeicherten vorangegangenen Istwerten $r_{ist\_it}$ kompensiert wird, z.B. indem zum aktuellen Kurbelwinkel (oder Zeit) nicht der zugehörige gespeicherte Wert, sondern der um die bekannte Systemverzögerung zeitlich weiter vorne liegende Wert weitergegeben wird - es wird also in den vergangenen gespeicherten Werten $r_{ist\_it}$ ein Blick in die Zukunft gemacht. Die derart kompensierten (prädiktiven) Istwerte $r_{ist\_it\_komp}$ (ohne Systemverzögerung) und die transienten Istwerte $r_{ist\_trans}$ (mit Systemverzögerung) werden nun addiert, wodurch sich ein modifizierter Istwert $r_{ist\_mod}$

ergibt, der letztendlich der Regelung rückgeführt wird. Der modifizierte Istwert $r_{ist\_mod}$ ist damit eine Mischung aus einem prädiktiven Anteil ohne Systemverzögerung und einem transienten Anteil mit Systemverzögerung. Im prädiktiven, nun systemverzögerungsfreien Anteil steckt die Information mit der hohen Dynamik, welche für eine phasenrichtige Regelung notwendig ist. Die Dynamik des transienten Anteils ist wesentlich geringer als die des prädiktiven Anteils, weshalb hier die Systemverzögerung problemlos ist.

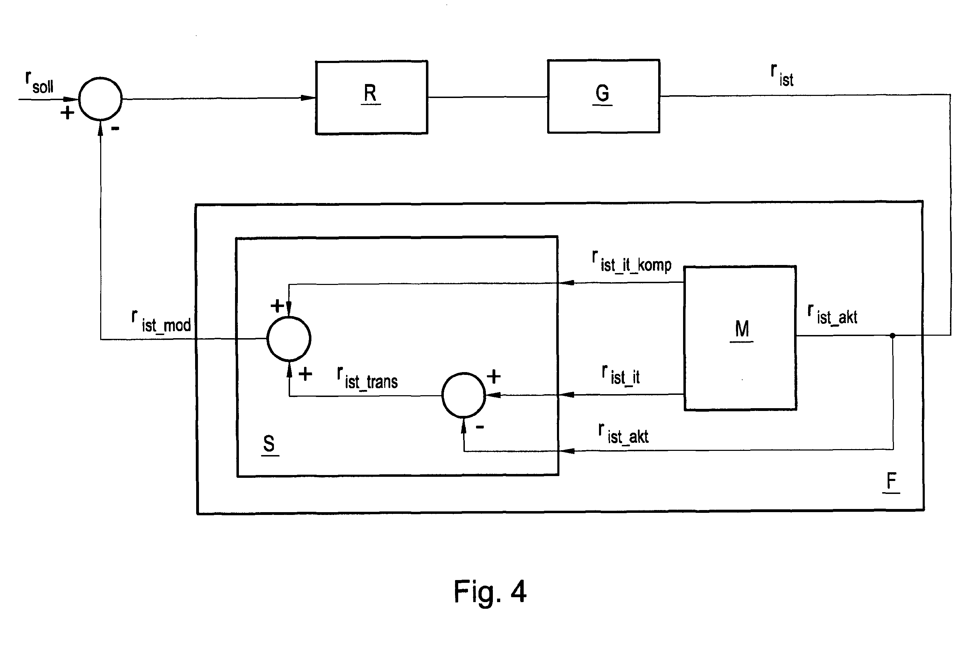

Auf die Kompensationseinheit K kann in der Berechnungseinheit S auch verzichtet werden, wenn die Speichereinheit M zwei Ausgänge aufweist, wobei an einem Ausgang die zum aktuellen Winkel (oder Zeit) zugehörigen Werte ausgegeben werden und am anderen Ausgang, die um die Systemverzögerung zeitlich verschobenen Werte ausgegeben werden, wie in Fig. 4 dargestellt. Alternativ können auch zwei zyklische Speichereinheiten vorgesehen sein, wobei in einer Speichereinheit jeweils der gesamte Arbeitszyklus zeit- oder winkelaufgelöst, z.B. 720° Kurbelwinkel bei einem 4-Takt Verbrennungsmotor, gespeichert wird und in der anderen, der um die Systemverzögerung verkürzte Arbeitszyklus, z.B. 690° Kurbelwinkel bei einem 4-Takt Verbrennungsmotor und einer Systemverzögerung von 30°. Am zweiten Ausgang liegt damit immer ein um die Systemverzögerung "zukünftiger" Wert an.

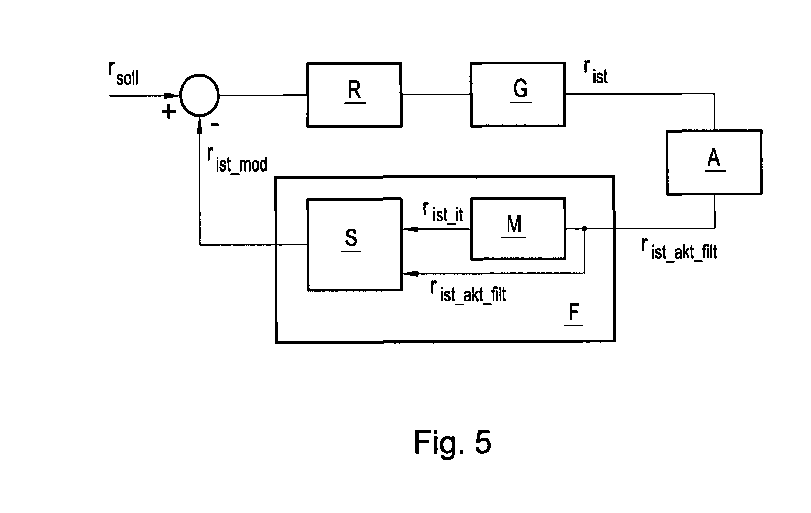

In Fig. 5 ist eine weitere Ausgestaltung der Erfindung dargestellt. Hier ist zwischen Strecke G und Istwertberechnungseinheit F ein Tiefpassfilter A geschaltet, das aus den aktuellen Istwerten $r_{ist\_akt}$ die Frequenzanteile herausfiltert, die über dem 1,4-fachen, vorzugsweise über dem $\sqrt{2}$ -fachen, der Eigenfrequenz der Anordnung liegen. Der modifizierte Istwert $r_{ist\_mod}$ wird in Folge wie oben beschrieben mit diesem gefilterten aktuellen Istwert $r_{ist\_akt\_filt}$ ermittelt.

Wie der Regler R ausgeführt ist und wie die Strecke G modelliert ist, ist für die gegenständliche Erfindung ohne Bedeutung. Obwohl das erfindungsgemäße Regelschema mit der Istwertberechnungseinheit F vordringlich auf die Dämpfung von Resonanzen abzielt, so ist trotzdem anzumerken, dass die Istwertberechnungseinheit natürlich auch in Regelungen eingesetzt werden kann, in denen keine Resonanzen zu erwarten sind - in diesem Fall eben als zusätzliche Dämpfung.

**Patentansprüche**

1. Verfahren zur Regelung einer Prüfstandsanordnung mit einem Prüfling (1) mit sich wiederholendem Arbeitszyklus und mit einer Belastungsmaschine (2), die durch eine Verbindungswelle (3) mit dem Prüfling (1) verbunden ist, **dadurch gekennzeichnet, dass** aus einem aktuellen Istwert ($r_{ist\_akt}$) der Regelung und einer Vorhersage eines bevorstehenden, systemverzögerungsfreien Istwertes auf der Grundlage des Istwertes eines vorherigen Arbeitszyklus ein modifizierter Istwert ($r_{ist\_mod}$) ermittelt wird, der der Regelung rückgeführt wird.

2. Verfahren nach Anspruch 1, **dadurch gekennzeichnet, dass** der aktuelle Istwert ($r_{ist\_akt}$) in einen systemverzögerungsbehafteten transienten Anteil ($r_{ist\_trans}$), der die Änderung des aktuellen zu einem vorangegangenen Arbeitszyklus darstellt, und in einen prädiktiven, um die Systemverzögerung kompensierten Anteil ($r_{ist\_it\_komp}$), der einen sich wiederholenden Anteil darstellt, aufgeteilt wird und aus dem systemverzögerungsbehafteten transienten Anteil ($r_{ist\_trans}$) und dem systemverzögerungsfreien prädiktiven Anteil ($r_{ist\_it\_komp}$)der modifizierte Istwert ($r_{ist\_mod}$) ermittelt wird, der der Regelung rückgeführt wird.

3. Verfahren nach Anspruch 2, **dadurch gekennzeichnet, dass** der transiente Anteil ($r_{ist\_trans}$) des aktuellen Istwertes ($r_{ist\_akt}$) mit einem arbeitszyklussynchronen Mittelwertfilter vorverarbeitet wird.

4. Verfahren nach Anspruch 2 oder 3, **dadurch gekennzeichnet, dass** die Istwerte ($r_{ist}$) eines vorangegangenen Arbeitszyklus der Anlage zeit- oder winkelaufgelöst in einer Speichereinheit (M) abgespeichert werden und einer Berechnungseinheit (S) die aktuellen Istwerte ($r_{ist\_akt}$)und die gespeicherten vorangegangenen Istwerte ($r_{ist\_it}$) zugeführt werden, dass die in den gespeicherten vorangegangenen Istwerten ($r_{ist\_it}$) inne wohnende Systemverzögerung kompensiert wird, indem die um die Systemverzögerung weiter vorne liegenden gespeicherten vorangegangenen Istwerte ($r_{ist\_it}$) als prädiktive Istwerte ($r_{ist\_it\_komp}$) verwendet werden, dass in der Berechnungseinheit (S) zur Ermittlung der transienten Istwerte ($r_{ist\_trans}$)die Differenz aus den gespeicherten verzögerungsbehafteten vorangegangenen Istwerten ($r_{ist\_it}$) und den verzögerungsbehafteten aktuellen Istwerten ($r_{ist\_akt}$) gebildet wird und dass die prädiktiven Istwerte ($r_{ist\_it\_komp}$) und die transienten Istwerte ($r_{ist\_trans}$) zum modifizierten Istwert ($r_{ist\_mod}$) addiert werden.

5. Verfahren nach Anspruch 4, **dadurch gekennzeichnet, dass** die Speichereinheit (M) die gespeicherten vorangegangenen Istwerte ($r_{ist\_it}$) und die um die Systemverzögerung winkel- oder zeitverschobenen gespeicherten Istwerte ($r_{ist\_it\_komp}$) an die Berechnungseinheit (S) weitergibt.

6. Verfahren nach einem der Ansprüche 1 bis 5, **dadurch gekennzeichnet, dass** aus dem aktuellen Istwert ($r_{ist\_akt}$) die Frequenzanteile herausgefiltert werden, die über dem 1,4-fachen, vorzugsweise über dem $\sqrt{2}$-fachen, der Eigenfrequenz liegen und der modifizierte Istwert ($r_{ist\_mod}$) mit diesem gefilterten aktuellen Istwert ($r_{ist\_akt\_filt}$) ermittelt wird.

7. Regelungsanordnung zur Regelung einer Prüfstandsanordnung mit einem Prüfling (1) mit sich wiederholendem Arbeitszyklus der durch eine Verbindungswelle (3) mit einer Belastungsmaschine (2) verbunden ist und mit einem Regler (R) und einer Istwertberechnungseinheit (F), wobei die Istwertberechnungseinheit (F) in einem Feedback-Zweig angeordnet ist, **dadurch gekennzeichnet, dass** in der Istwertberechnungseinheit (F) ein aktueller Istwert ($r_{ist\_akt}$) der Regelung und eine Vorhersage eines bevorstehenden, systemverzögerungsfreien Istwertes auf der Grundlage des Istwertes eines vorherigen Arbeitszyklus zu einem modifizierten Istwert ($r_{ist\_mod}$) verarbeitbar sind, der der Regelung rückgeführt wird.

8. Regelungsanordnung nach Anspruch 7, **dadurch gekennzeichnet, dass** ein aktueller Istwert ($r_{ist\_akt}$) der Regelung in einen systemverzögerungsbehafteten transienten Anteil ($r_{ist\_trans}$), der die Änderung des aktuellen zu einem vorangegangenen Arbeitszyklus darstellt, und in einen prädiktiven, um die Systemverzögerung kompensierten Anteil ($r_{ist\_it\_komp}$) aufteilbar sind und aus dem transienten Anteil ($r_{ist\_trans}$) und dem prädiktiven Anteil ($r_{ist\_it\_komp}$) ein modifizierter Istwert ($r_{ist\_mod}$) ermittelbar ist, der der Regelung rückgeführt wird.

9. Regelungsanordnung nach Anspruch 8, **dadurch gekennzeichnet, dass** in der Istwertberechnungseinheit (F) eine Speichereinheit (M) und eine Berechnungseinheit (S) vorgesehen sind, wobei der Istwertberechnungseinheit (F) die aktuellen Istwerte ($r_{ist\_akt}$) zuführbar sind und in der Speichereinheit (M) die Istwerte ($r_{ist\_it}$) eines vorangegangenen Arbeitszyklus der Anlage zeit- oder winkelaufgelöst speicherbar sind, dass in der Berechnungseinheit (S) zur Ermittlung der transienten Istwerte ($r_{ist\_trans}$) die Differenz aus den in der Speichereinheit (M) gespeicherten verzögerungsbehafteten vorangegangenen Istwerten ($r_{ist\_it}$) und den verzögerungsbehafteten aktuellen Istwerten ($r_{ist\_akt}$) ermittelbar ist, dass in der Istwertberechnungseinheit (F) die in den gespeicherten vorangegangenen Istwerten inne wohnende Systemverzögerung kompensierbar ist, indem die um die Systemverzögerung weiter vorne liegende gespeicherten vorangegangenen Istwerte als prädiktive Istwerte ($r_{ist\_it\_komp}$) weitergegeben werden und dass in der Berechnungseinheit (S die prädiktiven Istwerte ($r_{ist\_it\_komp}$) und die transienten Istwerte ($r_{ist\_trans}$) zum modifizierten Istwert ($r_{ist\_mod}$) addierbar sind.

**10.** Regelungsanordnung nach Anspruch 9, **dadurch gekennzeichnet, dass** an der Speichereinheit (M) zwei Ausgänge vorgesehen sind und die gespeicherten vorangegangenen Istwerte ($r_{ist\_it}$) an einem Ausgang und die um die Systemverzögerung winkel- oder zeitverschobenen gespeicherten Istwerte ($r_{ist\_it\_komp}$) am anderen Ausgang ausgebbar sind.

**11.** Regelungsanordnung nach einem der Ansprüche 7 bis 10, **dadurch gekennzeichnet, dass** ein Tiefpassfilter (A) vorgesehen ist, das aus dem aktuellen Istwert ($r_{ist\_akt}$) die Frequenzanteile herausfiltert, die über dem 1,4-fachen, vorzugsweise über dem

$$\sqrt{2} \text{ -fachen,}$$ der Eigenfrequenz liegen und in der Istwertberechnungseinheit (F) der modifizierte Istwert ($r_{ist\_mod}$) mit diesem gefilterten aktuellen Istwert ($r_{ist\_akt\_filt}$) ermittelbar ist.

**Claims**

**1.** A method for controlling a test bench arrangement comprising a test specimen (1) with a repeating working cycle and a dynamometer (2) which is connected through a connecting shaft (3) to the test specimen (1), **characterized in that** from a current actual value ($r_{ist\_akt}$) of the control system and a prediction of an imminent system-delay-free actual value on the basis of the actual value of a previous working cycle, a modified actual value ($r_{ist\_mod}$) is determined which is fed back to the control.

**2.** The method according to claim 1, **characterized in that** the current actual value ($r_{ist\_akt}$) is divided into a system-delay-afflicted transient portion ($r_{ist\_trans}$) which represents the change of the current to a preceding working cycle and into a predictive portion ($r_{ist\_it\_Komp}$) which is compensated by the system delay and represents the repeating portion, and from the system-delay-afflicted transient portion ($r_{ist\_trans}$) and the system-delay-free predictive portion ($r_{ist\_it\_komp}$) , the modified actual value ($r_{ist\_mod}$) is determined which is fed back to the control system.

**3.** The method according to claim 2, **characterized in that** the transient portion ($ri_{st\_trans)}$ of the current actual value ($r_{ist\_akt}$) is pre-processed with a working cycle-synchronous mean value filter.

**4.** The method according to claim 2 or claim 3, **characterized in that** the actual values ($r_{ist}$) of a previous working cycle of the installation are stored in a time- or angle-resolved manner in a storage unit (M), and the current actual values ($r_{ist\_akt}$) and the stored previous actual values ($r_{ist\_it}$) are fed to a calculating unit (S), **that** the system delay inherent in the stored previous actual values ($r_{ist\_it}$) is compensated by using the stored previous actual values ($r_{ist\_it}$), which are delayed by the system delay, as predictive actual values ($r_{ist\_it\_komp}$), **that** in the calculating unit (S) for determining the transient actual values ($r_{ist\_trans}$), the difference between the stored delay-afflicted previous actual values ($r_{ist\_it}$) and the delay-afflicted current actual values ($r_{ist\_akt}$) is formed, and **that** the predictive actual values ($r_{ist\_it\_komp}$) and the transient actual values ($ri_{st\_trans}$) are added to the modified actual value ($ri_{st\_mod}$).

**5.** The method according to claim 4, **characterized in that** the storage unit (M) transmits the stored previous actual values ($ri_{st\_it}$) and the stored actual values ($r_{ist\_it\_komp}$) which are angle- or time-delayed by the system delay to the calculating unit (S).

**6.** The method according to any one of the claims 1 to 5, **characterized in that** from the current actual value ($r_{ist\_akt}$) those frequency parts are filtered out which lie above the 1.4-fold, preferably above the

$$\sqrt{2} \text{ -fold}$$ of the resonance frequency, and the modified actual value ($r_{ist\_mod}$) is determined with this filtered current actual value ($ri_{st\_akt\_filt}$).

**7.** A control arrangement for controlling a test bench arrangement comprising a test specimen (1) with a repeating working cycle, which test specimen is connected through a connecting shaft (3) to a dynamometer (2), and further comprising a controller (R) and an actual value calculating unit (F), wherein the actual value calculating unit (F) is arranged in a feedback branch, **characterized in that** in the actual value calculating unit (F), a current actual value ($r_{ist\_akt}$) of the control system and a prediction of an imminent system-delay-free actual value on the basis of the actual value of a previous working cycle can be processed so as to form a modified actual value ($R_{ist\_mod}$) which is fed back to the control system.

**8.** The control arrangement according to claim 7, **characterized in that** a current actual value ($r_{ist\_akt}$) of the control system can be divided into a system-delay-afflicted transient portion ($r_{ist\_trans}$) which represents the change of the current to a previous working cycle, and into a predictive portion ($r_{ist\_it\_komp}$) which is compensated by the system delay, and from the transient portion ($r_{ist\_trans}$) and the predictive portion ($r_{ist\_it\_komp}$), a modified actual value ($r_{ist\_mod}$) can be determined which is fed back to the control system.

**9.** The control arrangement according to claim 8, **characterized in that** a storage unit (M) and a calculating unit (S) are provided in the actual value calculating unit (F), wherein the current actual values ($r_{ist\_akt}$)

can be fed to the actual value calculating unit (F) and the actual values ($r_{ist\_it}$) of a previous working cycle of the installation can be stored in a time- or angle-resolved manner in the storage unit (M), **that** in the calculating unit (S) for determining the transient actual values ($r_{itst\_trans}$), the difference between the delay-afflicted previous actual values ($r_{ist\_it}$) stored in the storage unit (M) and the delay-afflicted current actual values ($r_{ist\_akt}$) can be determined, **that** in the actual value calculating unit (F), the system delay inherent in the stored previous actual values can be compensated by transmitting the stored previous actual values, which are delayed by the system delay, as predictive actual values ($r_{ist\_it\_komp}$), and **that** in the calculating unit (S), the predictive actual values ($r_{ist\_it\_komp}$) and the transient actual values ($r_{ist\_trans}$) can be added to the modified actual value ($r_{ist\_mod}$).

10. The control arrangement according to claim 9, **characterized in that** two outputs are provided at the storage unit (M), and the stored previous actual values ($r_{ist\_it}$) can be output at the one output and the stored actual values ($r_{ist\_it\_komp}$), which are angle- or time-delayed by the system delay, can be output at the other output.

11. The control arrangement according to any one of the claims 7 to 10, **characterized in that** a low pass filter (A) is provided which filters those frequency parts out of the current actual value ($r_{ist\_akt}$) which lie above the 1.4-fold, preferably the $\sqrt{2}$ `-fold` of the resonance frequency, and in the actual value calculating unit (F), the modified actual value ($r_{ist\_mod}$) can be determined with this filtered current actual value ($r_{ist\_akt\_filt}$).

## Revendications

1. Procédé de régulation d'un agencement de banc d'essai comportant un groupe à l'essai (1) ayant un cycle de travail qui se répète et une machine de sollicitation (2) qui est reliée au groupe à l'essai (1) par un arbre de liaison (3), **caractérisé en ce que**, à partir d'une valeur réelle actuelle ($r_{ist\_akt}$) de la régulation et d'une prévision d'une valeur réelle future non affectée par la temporisation du système, obtenue sur la base d'une valeur réelle d'un cycle de travail précédent, une valeur réelle modifiée ($r_{ist\_mod}$) est déterminée et est renvoyée à la régulation.

2. Procédé selon la revendication 1, **caractérisé en ce que** la valeur réelle actuelle ($r_{ist\_akt}$) est subdivisée en une composante transitoire affectée par la temporisation du système ($r_{ist\_trans}$), qui représente la variation du cycle de travail actuel par rapport à un cycle de travail précédent, et en une composante prédictive, compensée de la temporisation du système ($r_{ist\_it\_komp}$), qui représente une composante qui se répète, et **en ce que**, à partir de la composante transitoire affectée par la temporisation du système ($r_{ist\_trans}$) et de la composante prédictive non affectée par la temporisation du système ($t_{ist\_it\_komp}$) la valeur modifiée ($r_{ist\_mod}$) est déterminée et est renvoyée à la régulation.

3. Procédé selon la revendication 2, **caractérisé en ce que** la composante transitoire ($r_{ist\_trant}$) de la valeur réelle actuelle ($r_{ist\_akt}$) est prétraitée par un filtre moyenneur synchronisé avec le cycle de travail.

4. Procédé selon la revendication 2 ou 3, **caractérisé en ce que** les valeurs réelles ($r_{ist}$) d'un cycle de travail précédent de l'installation sont sauvegardées avec une résolution temporelle ou angulaire dans une unité de mémoire (M) et **en ce qu'**une unité de calcul (S) reçoit les valeurs réelles actuelles ($r_{ist\_akt}$) et les valeurs réelles précédentes ($r_{ist\_it}$) sauvegardées, **en ce que** la temporisation inhérente au système est compensée dans les valeurs réelles précédentes ($r_{ist\_it}$) en utilisant comme valeurs prédictives ($r_{ist\_it\_komp}$) les valeurs réelles précédentes ($r_{ist\_it}$) sauvegardées qui se trouvent décalées vers l'avant d'une valeur égale à la temporisation du système, **en ce que** l'unité de calcul (S), afin de déterminer les valeurs réelles transitoires ($r_{ist\_trans}$) produit la différence entre les valeurs réelles précédentes ($r_{ist\_it}$) affectées par la temporisation du système et sauvegardées et les valeurs réelles actuelles ($r_{ist\_akt}$) affectées par la temporisation du système et **en ce que** les valeurs réelles prédictives ($r_{ist\_it\ komp}$) et les valeurs réelles transitoires ($r_{ist\_trans}$) sont additionnées à la valeur réelle modifiée ($r_{ist\_mod}$).

5. Procédé selon la revendication 4, **caractérisé en ce que** l'unité de mémoire (M) fournit à l'unité de calcul (S) les valeurs réelles précédentes ($r_{ist\_it}$) sauvegardées et les valeurs réelles sauvegardées ($r_{ist\_it\_komp}$), décalées angulairement ou temporellement de la temporisation du système.

6. Procédé selon l'une des revendications 1 à 5, **caractérisé en ce que** l'on élimine par filtrage dans la valeur réelle actuelle ($r_{ist\_akt}$) les composantes de fréquence qui se situent au-dessus de la fréquence égale à 1,4 fois, de préférence égale à √2 fois, la fréquence propre et **en ce que** la valeur réelle modifiée ($r_{ist\_mod}$) est déterminée à l'aide de cette valeur réelle actuelle filtrée ($r_{ist\_akt\_filt}$).

7. Agencement de régulation, destiné à réguler un agencement de banc d'essai comportant un groupe à l'essai (1) qui possède un cycle de travail qui se répète et qui est relié par un arbre de liaison (3) à une machine de sollicitation (2) et comportant un régulateur (R) et une unité de calcul de valeur réelle (F), l'unité de calcul de valeur réelle (F) étant montée sur une branche de retour d'informations, **caractérisé en ce que** l'unité de calcul de valeur réelle (F) peut traiter une valeur réelle actuelle ($r_{ist\_akt}$) de la régulation et une prévision d'une valeur réelle future non affectée par la temporisation du système, obtenue sur la base de la valeur réelle d'un cycle de travail précédent pour donner une valeur réelle modifiée ($r_{ist\_mod}$) qui est renvoyée à la régulation.

8. Agencement de régulation selon la revendication 7, **caractérisé en ce qu'**une valeur réelle actuelle ($r_{ist\_akt}$) de la régulation est subdivisée en une composante transitoire affectée par la temporisation du système ($r_{ist\_trans}$), qui représente la variation du cycle de travail actuel par rapport à un cycle de travail précédent, et en une composante prédictive, compensée de la temporisation du système ($r_{ist\_it\_komp}$), et **en ce que**, à partir de la composante transitoire ($r_{ist\_trans}$) et de la composante prédictive ($t_{ist\_it\_komp}$), une valeur réelle modifiée ($r_{ist\_mod}$) est déterminée et est renvoyée à la régulation.

9. Agencement de régulation selon la revendication 8, **caractérisé en ce qu'**il est prévu dans l'unité de calcul de valeur réelle (F) une unité de mémoire (M) et une unité de calcul (S), l'unité de calcul de valeur réelle (F) pouvant recevoir les valeurs réelles actuelles ($r_{ist\_akt}$) et l'unité de mémoire (M) pouvant sauvegarder les valeurs réelles ($r_{ist\_it}$) d'un cycle de travail précédent de l'installation, avec une résolution temporelle ou angulaire, **en ce que** l'unité de calcul de valeur réelle (F), pour déterminer les valeurs réelles transitoires ($r_{ist\_trans}$), peut déterminer la différence entre les valeurs réelles précédentes ($r_{ist\_it}$) affectées par la temporisation du système et sauvegardées dans l'unité de mémoire et les valeurs réelles actuelles ($r_{ist\_akt}$) affectées par la temporisation du système, **en ce que** l'unité de calcul de valeur réelle (F) peut compenser la temporisation du système inhérente aux valeurs réelles précédentes sauvegardées en transmettant comme valeurs réelles prédictives ($r_{ist\_it\_komp}$) les valeurs réelles précédentes sauvegardées se trouvant décalées vers l'avant d'une valeur égale à la temporisation du système et **en ce que** l'unité de calcul (S) peut additionner les valeurs réelles prédictives ($r_{ist\_it\_komp}$) et les valeurs réelles transitoires ($r_{ist\_trans}$) à la valeur réelle modifiée ($r_{ist\_mod}$).

10. Agencement de régulation selon la revendication 9, **caractérisé en ce qu'**il est prévu deux sorties sur l'unité de mémoire (M) et **en ce que** les valeurs réelles précédentes ($r_{ist\_it}$) sauvegardées peuvent être produites sur l'une des sorties et les valeurs réelles sauvegardées ($r_{ist\_it\_komp}$) décalées angulairement ou temporellement de la temporisation du système sur l'autre sortie.

11. Agencement de régulation selon l'une des revendications 7 à 10, **caractérisé en ce qu'**il est prévu un filtre passe-bas (A) qui, à partir de la valeur réelle actuelle ($r_{ist\_akt}$), extrait les composantes de fréquence qui se situent au-dessus de la fréquence égale à 1,4 fois, de préférence égale à $\sqrt{2}$ fois, la fréquence propre et **en ce que** l'unité de calcul de valeur réelle (F) peut déterminer la valeur réelle modifiée ($r_{ist\_mod}$) à l'aide de cette valeur réelle actuelle filtrée ($r_{ist\_akt\_filt}$).

Fig. 1

Fig. 2

Fig. 3

Fig. 4

Fig. 5

EP 2 321 708 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **K. Shirota et al.** Development of ‚Virtual and Real Simulator' for Engine. *SAE 2001 World Congress*